# EUROPEAN PATENT APPLICATION

(11) **EP 2 747 058 A2**
(43) Date of publication of application: **25.06.2014**
(21) Application number: 13197693.8
(22) Date of filing: 17.12.2013
(51) Int. Cl.: G09F 3/00, G09F 3/02

(54) **A label and label printer**

(30) Priority: 18.12.2012 JP 2012275652
(71) Applicant: Kabushiki Kaisha Toshiba, Tokyo 105-8001 (JP)
(72) Inventor: Hamamura, Tomoyuki, Tokyo 105-8001 (JP); Sawada, Akira, Tokyo 105-8001 (JP); Maeda, Masaya, Tokyo 105-8001 (JP); Irie, Bunpei, Tokyo 105-8001 (JP); Piao, Ying, Tokyo 105-8001 (JP); Watanabe, Yuka, Tokyo 105-8001 (JP); Saito, Hiroo, Tokyo 105-8001 (JP)
(74) Representative: HOFFMANN EITLE

(57) **Abstract**

According to the embodiment form, a label is equipped with a sheet-like base material, an adhesion layer, and an exfoliation base material. A sheet-like base material has a printable printing side. An adhesion layer is prepared in a field opposite to the printing side in a sheet-like base material. Through the above-mentioned sheet-like base material and the above-mentioned adhesion layer, an exfoliation base material is pasted up so that exfoliation is possible. In the printing side of the above-mentioned sheet-like base material, the identification information for identifying the above-mentioned object to two or more partial domains (300,3011,302) divided in the straight line made to correspond to the boundary of the field and field in an above-mentioned box type object is printed, respectively.

## Description

### TECHNICAL FIELD

Exemplary embodiments of the disclosure described herein relate to a label and label printer.

### BACKGROUND ART

In delivery systems, such as for packages, the convention is for sticking a label with printed identification information, including information which shows the destination, such as an address, a postal code number, and distribution station information. The information which shows the attribute of a delivery thing, or the delivery method, is in the form of a bar code, a character string, a number sequence, or a mark on a delivery thing.

In such a delivery system, the information reading equipment which has a bar code reader or a camera recognizes the identification information currently printed by the label stuck on the delivery thing. However, the delivery thing may be in the state of being hard to read the printing side of the label currently stuck, in actual employment. For this reason, there is a need for easy to read information printed on the package, and a label which can increase in efficiency for processing and delivering the package.

### BRIEF DESCRIPTION OF THE DRAWINGS

FIG. 1 is a figure showing the structure of a sheet handling equipment according to an embodiment of the present disclosure.
FIG. 2 is a figure showing the sectional view of a label paper which constitutes a label according to an embodiment of the present disclosure.
FIG. 3 is a figure showing the composition of the printing side in a label according to an embodiment of the present disclosure.
FIG. 4 is a figure showing a label affixed to a package.
FIG. 5 is a figure showing the mark showing This Side Up as an example of the mark printed to some in the printing side of the label according to an embodiment of the present disclosure.
FIG. 6 is a figure showing an example in which printed information is different to each partial domain of the label according to an embodiment of the present disclosure.
FIG. 7 is a figure showing the composition of the printing side in the label of according to an embodiment of the present disclosure.
FIG. 8 is a figure showing a label according to an embodiment of the present disclosure affixed to a package.

### EMBODIMENTS OF THE DISCLOSURE

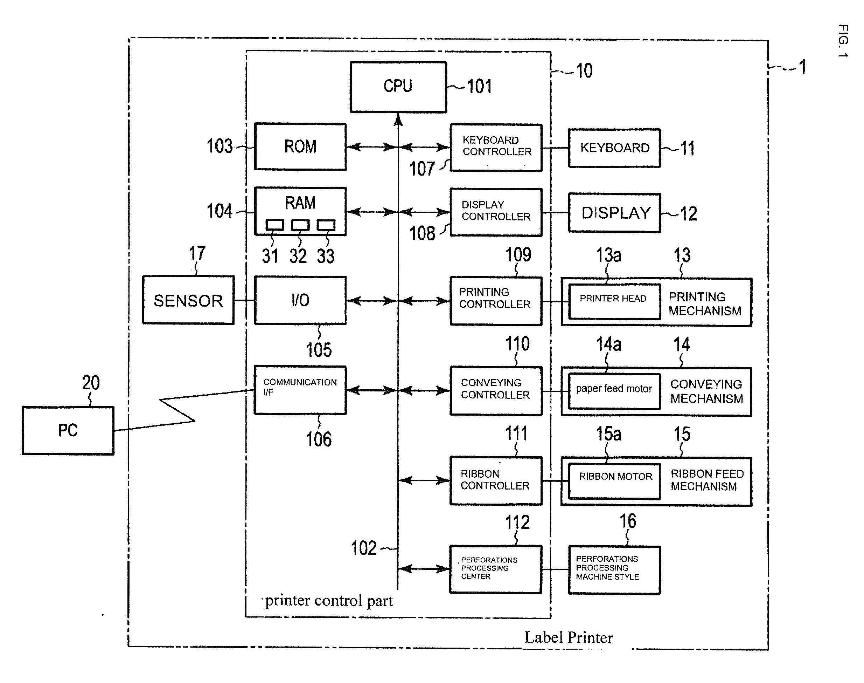

Hereafter, the form of embodiments are explained with reference to the drawings. Fig. 1 is a block diagram showing the example of composition of Label Printer 1 concerning the form of implementation of this disclosure.

Label Printer 1 has the ribbon feed mechanism 15, the perforations processing machine style 16, and the various sensors 17 for the printer control part 10, the keyboard 11, the display part 12, the printing mechanism 13 that has the printhead 13a, the conveyance mechanism 14 in which it has the paper feed motor 14a, and the ribbon motor 15a. Moreover, the personal computer (it is hereafter called PC for short) 20 offered as a host device (external equipment) of Label Printer 1 is connected to the printer control part 10.

Fig. 1 also includes the following: printer control part 10, CPU (Central Processing) Unit 101, the bus line 102, ROM (Read) Only Memory103, RAM (Random) Access. Memory104, the I/O (Input/Output) port 105, the communication interface 106, the keyboard controller 107, the display controller 108, the printing controller 109, the conveyance controller 110, the ribbon controller 111, and perforations processing controller 112.

CPU 101 is a processor which manages control of the Label Printer 1. Printer control 10 includes CPU 101 with bus lines 102, such as an address bus and a data bus, ROM (Read Only Memory) 103, RAM (Random Access Memory) 104, I/O (Input/Output) port 105, communication interface 106, the keyboard controller 107, the display controller 108, the printing controller 109, the conveyance controller 110, the ribbon controller 111, and the perforations processing controller 112.

ROM 103 is a fixed memory. ROM 103 remembers required information that Label Printer 1 operates. For example, ROM 103 memorizes the program which CPU 101 executes including control data, setting data, etc. CPU 101 realizes the control facility and processing capability of each part by executing the control program memorized by ROM 103 etc.

RAM 104 is a volatile memory which memorizes data temporarily. RAM 104 includes printing information, including the identification information etc. which should be printed on a label. The label setting buffer 33 memorizes the printing setting information that the printing area to the label paper of the printing data buffer 31 for memorizing. The drawing buffer 32 memorizes the dot image printed to the printing side of a label, and an initial state, etc.

For example, the printing data buffer 31 memorizes identification information, including the information which shows a destination, the information which shows the delivery method, the information which shows the attribute of a delivery thing, etc., as printing information. The drawing buffer 32 memorizes the dot image as an image data for printing based on the printhead 13a including bar code data, a character string, a mark, etc.

The label setting buffer 33 memorizes setting information, including the printing area to the printing side of the label paper which carries out printing processing, etc., in order to generate the label. The identification information (printing information) and the dot image for printing that should be printed and print set information, may be downloaded from PC 20 and CPU 101 and may be generated from the information downloaded or inputted by the key operation by the keyboard 11.

The keyboard 11 is connected to the keyboard controller 107. The keyboard 11 has keys etc. that inputs the issue key that directs issue of a label and a stop key which directs a stop of operation, a number, or a character. The keyboard controller 107 supplies the information inputted into the keyboard 11 to CPU 101.

The display part 12 displays a message etc. The display part 12 is connected to the display controller 108. The display controller 108 performs display control to the display part 12 according to the control directions from CPU 101. For example, the display part 12 displays a printer operation situation or an error message.

The printing mechanism 13 has the printhead 13a which prints the dot image for printing including a bar code, a character string, a mark, etc. which were stored in the drawing buffer 32 to the printing side of a label paper.

The printhead 13a is a line thermal head, for example, for the printing controller 109.

The printhead 13a etc. are connected. The printing controller 109 carries out drive control of the printhead 13a according to the dot image printed to the printing side of a label paper where control is directed from CPU 101.

The conveyance mechanism 14 conveys the print media along a conveyance way (not shown) which can be label paper. The conveyance mechanism 14 has the paper feed motor 14a. The paper feed motor 14a is a source of a drive for making a label paper convey according to a conveyance mechanism. The conveyance controller 110 is connected to the paper feed motor 14a. The conveyance controller 110 controls conveyance of a label paper by carrying out drive control of the paper feed motor 14a according to feed directions of the label paper from CPU 101. The label paper is stored in the storage part which is not illustrated and is taken out by the conveyance mechanism 14 and conveyed in the printing position by the printhead 13a, etc. A label paper has a release coated paper (exfoliation base material) which protects the adhesive face (adhesion layer) adhering to the opposite side of the printing side of the sheet-like base material which has a printing side, and a sheet-like base material, and an adhesive face.

The ribbon feed mechanism 15 supplies an ink ribbon between the label paper and the printhead 13a which are conveyed by a conveyance mechanism (printing position). The ribbon feed mechanism 15 has the ribbon motor 15a as a source of a drive which supplies an ink ribbon. The ribbon controller 111 is connected to the ribbon motor 15a. The ribbon controller 111 carries out drive control of the ribbon motor 15a according to feed directions of the label paper from CPU 101.

The perforations processing machine style 16 is a mechanism in which perforations are added to the label paper conveyed by a conveyance mechanism. Perforations assist cutting of the sheet-like base material (or a sheet-like base material, an adhesion layer, an exfoliation layer, and the included label paper whole) of a label paper, and cutting in alignment with perforations is easy-ized. The perforations processing machine style 16 may put perforations into the whole label paper, and may put perforations into the sheet-like base material which constitutes a printing side without putting perforations into the release coated paper of a label paper. The perforations processing machine style 16 is connected to the perforations processing controller 112. The perforations processing controller 112 carries out drive control of the perforations processing machine style 16 according to the control directions from CPU 101.

In addition, you may put perforations into the predetermined position beforehand at the label paper. In this case, you may omit the composition of the perforations processing machine style 16 and the perforations processing controller 112.

The various sensors 17 are connected to I/O Port 105. For example, the sensors 17 connected to I/O Port 105 are a paper detection sensor for positioning of a label paper, a temperature sensor of a printhead, etc. I/O Port 105 supplies the signal inputted from the various sensors 17 to CPU 101.

The communication interface 106 is an interface for carrying out data communications to PC 20 as a host device of Label Printer 1. PC 20 generates or acquires the identification information printed to the printing side of a label. PC 20 changes into the data for printing of a bar code, a character string, or a mark with the identification information printed to the printing side of a label, and you may make it generate the dot image for printing to the label paper which arranged the data for those printing. In this case, the communication interface 106 should acquire the identification information which should be printed from PC 20, or the dot image for printing.

In addition, the identification information printed to the printing side of a label may be made to be inputted by the keyboard 11. In this case, CPU 101 generates the printing data of a bar code, a character string, or a mark, and you may make it generate the dot image for printing to the printing side of the label paper which arranged the printing data.

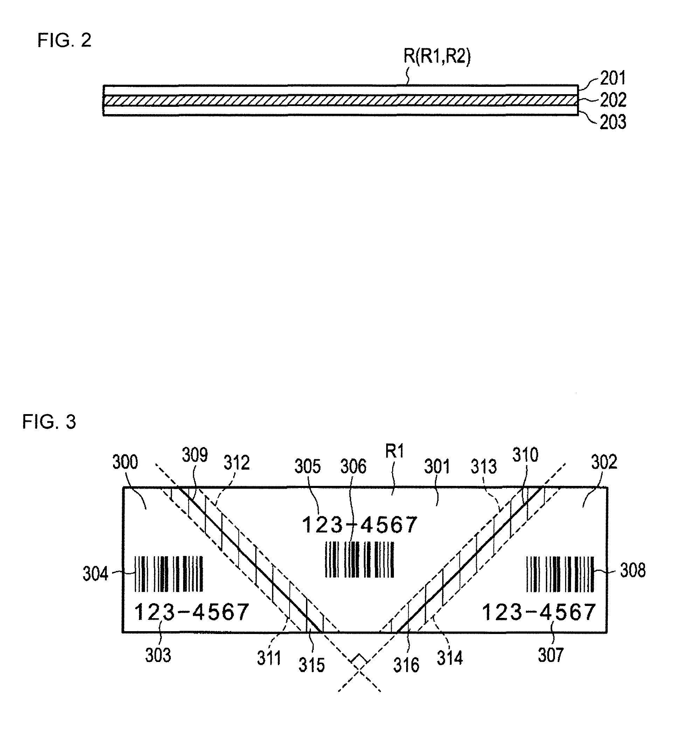

Next, the label is explained. Fig. 2 is a figure showing the sectional view of the label paper according to an embodiment. As shown in Fig. 2, label paper R is constituted by the sheet-like base material 201, the adhesion layer 202, and the exfoliation base material 203. A label paper as shown in Fig. 2 is stored in the paper storing part of Label Printer 1, and print (generation) processing is carried out as discussed later.

The sheet-like base material 201 has a printable printing side (welcomed field) with Label Printer 1. The adhesion layer 202 is formed in the opposite side (back) of the printing side in the sheet-like base material 201. The exfoliation base material 203 faces the sheet-like base material 201 on both sides of the adhesion layer 202. The exfoliation base material 203 separates leaving the adhesion layer 202 to the sheet-like base material 201. A label paper is in the state (state which the adhesion layer 202 exposed) with removed exfoliation base material 203, and it is stuck on objects, such as a delivery thing, so that the printing side of the sheet-like base material 201 is exposed.

In addition, it is not necessary to necessarily form the adhesion layer 202 in the whole back of the sheet-like base material 201. For example, in the back of the sheet-like base material 201, you may establish a domain without the adhesion layer 202 in some domains. Moreover, the perforations whose separation is attained may be prepared beforehand in the predetermined position of the sheet-like base material 201. Moreover, you may prepare perforations not only in the sheet-like base material 201 but in the adhesion layer 202 and the exfoliation base material 203.

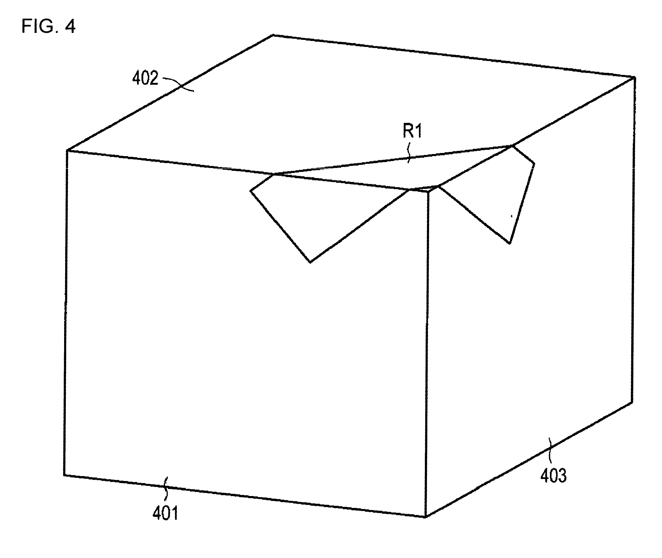

Next, the label of the 1st example of composition concerning an embodiment form is explained. Fig. 3 is a figure showing the composition of the printing surface in the label of the 1st example of composition concerning an embodiment form. Fig. 4 the label of the 1st example of composition concerning stuck on the delivery thing, or package. In the example shown in Fig. 3, the printing surface of the sheet-like base material 201 has rectangular form, and, as for the label R1 of the 1st example of composition, the long side is more than twice the size of the short side, for example. As shown in Fig. 3, the label R1 of the 1st example of composition has the three partial domains (printing area) 300, 301, and 302 in the printing surface of the sheet-like base material 201. Each partial domain 300, 301, and 302 is a printing area where the information etc. which shows each the destination and identification information is printed. As shown in Fig. 3, the partial domain 300, the partial domain 301, and the partial domain 302 are each domains which divide the printing side in the sheet-like base material 201 into three by the domains 315 and 316 on the basis of the two straight lines 309 and 310 which accomplish the angle (rectangular cross) of about 90 degrees, and cross.

In addition, the two straight lines 309 and 310 are the things corresponding to the boundary of the field and field in a delivery thing, as mentioned later. The angle which the two straight lines 309 and 310 cross is made into about 90 degrees (rectangular cross) because it assumes that the angle that each field (the field 401, the field 402 and the field 402, the field 403 and the field 403, and the field 401) in the delivery thing (package) on which sticks the label R1 makes a rectangular parallelepiped which is 90 degrees. Therefore, if the angle of the field and field in a delivery thing does not come out to 90 degrees, the angle which the two straight lines 309 and 310 cross can also be changed.

As shown in Fig. 3, in the partial domain 300 in the label R1, the partial domain 301, and the partial domain 302, identification information, including a destination, is printed. In the example shown in Fig. 3, the identification information printed by each of each partial domain 300, 301, and 302 is the same information containing the bar code with encoded information that shows destinations, such as a postal code number (string information).

In the example shown in Fig. 3, in the partial domain 300, the postal code number 303 and the bar code 304 as a character string are printed, the postal code number 305 and the bar code 306 are printed in the partial domain 301, and the postal code number 307 and the bar code 308 are printed in the partial domain 302. The postal code number 303, the postal code number 305, and the postal code number 307 are the same string information, and the same information as expressed in the bar code 304, the bar code 306, and the bar code 308. That is, in the example of the label R1 shown in Fig. 3, the same information is printed in each partial domain 300, 301, and 302.

Moreover, as shown in Fig. 4, the label R1 of the 1st example of composition is stuck ranging over three fields, the field 401, the field 402, and the field 403, which constitute the one peak in a rectangular parallelepiped-like (box type) delivery thing. In the example shown in Fig. 4, the partial domain 300 of the label R1 shown in Fig. 3 is stuck on the field 401 of a delivery thing, the domain 301 of the label R1 shown in Fig. 3 is stuck on the field 402 of the delivery thing shown in Fig. 4, and the domain 302 of the label R1 shown in Fig. 3 is stuck on the field 403 of the delivery thing shown in Fig. 4.

Although three kinds of correspondence relation between each partial domain 300, 301, and 302 of the label R1 and the fields 401, 402, and 403 in a delivery thing are considered. For example, the partial domain 300 may be stuck on the field 402 of a delivery thing, the partial domain 301 may be stuck on the field 403 of a delivery thing, and the partial domain 302 may be stuck on the field 401 of a delivery thing. Moreover, the partial domain 300 is stuck on the field 403 of a delivery thing, the partial domain 301 is stuck on the field 401 of a delivery thing, and the partial domain 302 may be made to be stuck on the field 402 of a delivery thing.

The three partial domains 300, 301, and 302 are domains where the printing side in the sheet-like base material 201 was divided into three by the two straight lines 309 and 310 which accomplish the angle of about 90 degrees and cross (it intersects perpendicularly). In the example shown in Fig. 3, the three partial domains 300, 301, and 302 are domains divided into three by the two domains 315 and 316 on the basis of the two straight lines 309 and 310. Moreover, the straight line 309 and the straight line 310 which are shown in Fig. 3 may be made to be printed on the printing side of the sheet-like base material 201 as a solid line. The straight line 309 and the straight line 310 which were printed in the printing side of the sheet-like base material 201 function serve as a guide in the case of sticking on the delivery thing which is a rectangular parallelepiped-like (box type) object.

That is, as shown in Fig. 4, the label R1 is stuck so that the straight line 309 and the straight line 310 may be in agreement with the boundary of the field of a delivery thing and field which are the objects of a rectangular parallelepiped (box type). Each partial domain 300, 301, and 302 divided by the domains 315 and 316 on the basis of the straight lines 309 and 310 can be stuck on the delivery thing so that each may correspond to three fields (the field 401, the field 402, the field 403) of a delivery thing.

As mentioned above, the label R1 includes the identification information printed to each partial domain so that it can be read on 3 sides of a delivery thing by sticking three partial domains with printed identification information to each on three fields of a delivery thing, respectively. It is possible that identification information can be read on the partial domain of the label R1 in which the information reading equipment containing a bar code reader or a camera was focused on the delivery thing. Moreover, if it becomes impossible to read one or two partial domains because they are hidden or because of dirt, etc., the information reading equipment including a bar code reader or camera can read the identification information can read the information from the one or two of the other partial domains that are not hidden or dirty.

Moreover, even if it cannot read the whole identification information in one partial domain, it may succeed in reading (recognition) the whole identification information by unifying the reading result (recognition result) of the identification information over two or more partial domains. For example, from one partial domain, the front half of identification information can be recognized among 3 partial domains, and when the rear half of identification information has been recognized, it becomes possible from one another partial domain to recognize the whole identification information by unifying both recognition result.

Moreover, even if it is a case where two or more fields of a certain delivery thing are hidden in the state where the box-like (shape of rectangular parallelepiped) delivery thing is loaded, with other delivery things which touch the upper part or the side, if it is in the state which at least one partial domain of the label R1 can read, the identification information over the delivery thing concerned can be recognized. For example, if one partial domain stuck on the remaining fields of the delivery thing is exposed even if it is in the state in which the 2nd page that stuck two partial domains is hidden, the identification information on a delivery thing can be read in the partial domain concerned. Furthermore, when a rectangular parallelepiped-like delivery thing will be accumulated that it is high and there is no crevice, it can become a situation where only one field can be read among four sides of a delivery thing. If it takes care about the direction at the time of accumulating a delivery thing even if it is such a case, it will become possible to accumulate in the state where which partial domain can be read.

The box-like delivery thing has two pairs of sides which face each other. For example, the box-like delivery thing shown in Fig.4 has the pair of the field 401 and the field of the opposite side, and the pair of the field 403 of the field of the opposite side. The partial domain is stuck on both pairs, so even if three partial domains cannot be seen in the state where a delivery thing is stacked, by rotating 180 degrees, some of domains can be seen, and the identification information can be certainly read.

Next, the identification information printed to each partial domain of the label R1 is explained.

The information printed on the partial domain of the label R1 can include various information which shows a destination, information which shows the delivery method, information which shows the attribute of a delivery thing, etc. as identification information printed to each partial domain.

For example, as information showing a destination, it may be the address of a destination, the company name of a destination, a personal name of a destination, information that shows a carrier and that carries out information and shows the area of a destination, information showing the delivery base installed in the area of a destination, or a code used when classifying generally.

Sufficient information can include information which expresses a delivery day, information showing the delivery method, information showing delivery time, information showing being special delivery, the information showing being freezing, information showing refrigeration, information showing strict prohibition, information showing handling with caution, information showing avoiding shock, information showing avoiding fire, information showing avoiding cornering, information including the information showing being lower product strict prohibition, information showing being fall cautions, information showing being This Side Up, the information showing being No Hooks, or information showing being freeze cautions.

Moreover, the information may indicate conditions that could cause breaks or particular attributes of a delivery thing such as the information showing being precision instruments, the information showing being a fragile article, or the information showing being a living thing.

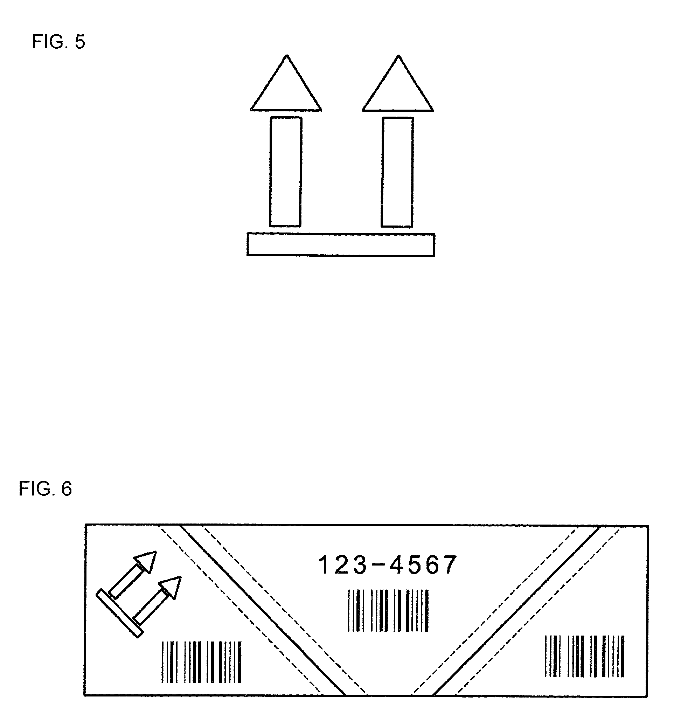

Furthermore, the identification information printed to each partial domain be expressed in various forms. For example, as a form which displays identification information, there is form written by the character or a character string, form encoded and displayed on a bar code, form encoded and displayed on a two-dimensional bar code, or form displayed as a mark with a specific meaning. For example, Fig. 5 is a figure showing the mark showing This Side Up as an example of the mark printed to a partial domain.

Moreover, the identification information which the information on at least one copy of identification information should just be printed, and is all printed to a part domain may not be completely the same as each partial domain. For example, it is not necessary to display all the identification information in all forms on the partial domains 300, the partial domains 301, and all the partial domains 302 (printing). The partial domains may have at least one type of identification information, and may not need more than two types identification information (the types of identification include a barcode or 7 digit code).

For example, Fig. 6 is a figure showing the example of label R1' from which the information printed to each partial domain differs. In label R1' of the example of composition shown in Fig. 6, although a bar code is printed by the partial domains 300, the partial domains 301, and all the partial domains 302, it is the composition of the postal code number written with the number and the hyphen being printed to the partial domain 302, and not being printed in other partial domains 300 and 302. Moreover, in label R1' shown in Fig. 6, the mark of This Side Up is printed to the partial domain 300, and it is not printed in other partial domains 301 and 302.

Moreover, one or more perforations are put into the sheet-like base material 201 along the straight line 309 and the straight line 310, respectively. Fig. 3 shows the example of a perforations about the straight lines 309 and 310 by the both sides which are predetermined width and separated from a straight line. That is, in the example shown in Fig. 3, the perforations 311 and the perforations 312 are put into both sides of the straight line 309, and the perforations 313 and the perforations 314 are put into both sides of the straight line 310. The width between the perforations 311 and the perforations 312 or the width between the perforations 313 and the perforations 314 are the domains 315 and 31 which are equivalent to the boundary portion of the field and field in a delivery thing when it sticks on a delivery thing.

The perforations 311, 312, 313, and 314 may penetrate sheet-like base material 201, the adhesion layer 202, and the exfoliation base material 203. A single perforation along each straight line 309 and 310 may be sufficient.

By putting 1 or two or more perforations into the straight line or domain corresponding to a boundary portion of a field and a field of a delivery thing, when distortion is added to the effect of not becoming the hindrance and delivery thing in the case of opening the box of a delivery thing, the effect of becoming difficult to generate wrinkles or a crack is in the partial domain of a label. That is, since the label R1 in the state where it stuck on the delivery thing is easily separated by perforations, even if it is in the state which has stuck the label R1, it becomes possible to open the box of a delivery thing easily.

Moreover, when the spatial relationship of two fields is changed on the neighborhood (boundary of a field and a field) by distortion produced in the delivery thing which stuck the label R1, the label R1, since it is easy to go out by the perforations located in the boundary portion of a field and a field, partial domains are separated -- it can hold in the state of being easy to read the information printed to the partial domain, without wrinkles, a crack, etc. arising in each partial domain. That is, since each partial domain of the label R1 is protected by perforations, it decreases that reading of the information printed to each partial domain is checked by wrinkles or crack, and things are improved by the recognition rate of the printed identification information.

Moreover, with the label R1 of the 1st example of composition shown in Fig. 3, information is not printed in the range of the fixed width on the basis of the two straight lines 309 and 310 (domain). In the example shown in Fig. 3, nothing is printed in the domain 315 and the domain 316 which are domains inserted into two perforations into which it was put along with the both sides of the two straight lines 309 and 310. The effect by this is as follows. The two above-mentioned straight line is located in the angle of a delivery thing when a label is stuck. In order that the angle of a delivery thing may contact other objects easily, in a label, the portion near the two above-mentioned straight line becomes dirty, or it is easy to damage it. Therefore, the information printed near the 2 straight lines can easily be made impossible to read if it becomes dirty or there is breakage.

Namely, by not printing information within the limits of a distance more nearly fixed than the two above-mentioned straight line, information is more easily read and it is harder to make the information unreadable.

Moreover, you may make it be easy to sight the domains 315 and 316 on the basis of the two straight lines 309 and 310 or the two straight lines 309 and 310 with the label R1 of the 1st example of composition shown in Fig. 3. In the example shown in Fig. 3, the two straight lines 309 and 310 are printed as a solid line.

Moreover, you may make it print the perforations 311, 312, 313, and 314 as shown in Fig. 3 by solid line or a dotted line, and they may change the color of the partial domain 300, the partial domain 301, the partial domain 302, the domain 315, and the domain 316.

For example, when sticking on the angle of a delivery thing, it is necessary to stick the label R1 so that the domain 315 and the domain 316 may be located in the boundary line of a field and a field. When the straight lines 309 and 310 or the visibility of the domains 315 and 316 is bad, attachment of the label R1 may take time, or attachment goes wrong, and the domain 315 or the domain 316 shifts from the boundary line of a field and a field, and may be stuck. That is, there is an effect which increases the efficiency of the pasting work to the delivery thing of the label R1 by making high the visibility of the straight lines 309 and 310 or the domains 315 and 316.

A position (getting it blocked domains 315 and 316) separable between the partial domain 300, the partial domain 301 and the partial domain 301, and the partial domain 302 has the above width to some extent. For example, if perforations are met by the straight line 309 and the straight line 310 and the label is not sticking so that perforations may be located in the boundary line of the field of a delivery thing, and a field, the effect mentioned above is hard to be acquired. The label has two perforations, so it is easy to adjust the stick position. Because the label has only to be stuck so that the boundary line may be located between two perforations or its neighborhood. For this reason, the thing which a certain amount of interval is vacated and is established for two perforations (they are the perforations 311 and 312 if it is the straight line 309), What is necessary will be just to stick a label so that the boundary line of a field and a field may be located between two perforations (perforations 311 and 312) or in its neighborhood, the time and effort of the position adjustment at the time of label pasting can be reduced, and the efficiency of label pasting work can be increased.

Moreover, when separation of the partial domain 300, the partial domain 301 and the partial domain 301, and the partial domain 302 becomes easier, it becomes possible to open the box of a delivery thing more easily and distortion arises in a delivery thing, it can suppress more that wrinkles that occur on a label. That is, it separates between the partial domain 300, the partial domain 301 and the partial domain 301, and the partial domain 302.

Giving the above width to the position has the effect of increasing the efficiency of label pasting work, opening the box of a delivery thing easily, and creating more controlled results for reading the labels when they become wrinkled. Furthermore, in order to heighten these effects further, you may prepare 1 more or two or more perforations between two perforations (inside of the domain 315 and 316).

Moreover, the hole of perforations is enlarged and achieving equivalent effects over the perforations of a small number by making perforations thick is also considered. Moreover, in order to heighten more the effect similarly mentioned above, you may make it not form the adhesion layer 202 between the perforations 311 and the perforations 312 between the perforations 313 and the perforations 14 (getting it blocked domains 315 and 316). not forming the adhesion layer 202 -- the power at the time of opening the box of a delivery thing to open can get across to perforations easily direct, and the box of a delivery thing can be easily opened now. Moreover, distortion of a delivery thing gets across to perforations easily direct, and can control generating of the crack in wrinkles or a partial domain, etc.

In addition, by the delivery thing of the form which is not a rectangular parallelepiped, although the label was able to be stuck to the rectangular parallelepiped-like delivery thing ranging over three fields, also when it cannot stick ranging over three fields, it thinks. In such a case, an effect which was mentioned above also by sticking the label of the 1st example of composition so that two fields of a delivery thing may be straddled is expectable.

Next, the label of the 2nd example of composition concerning an embodiment form is explained.

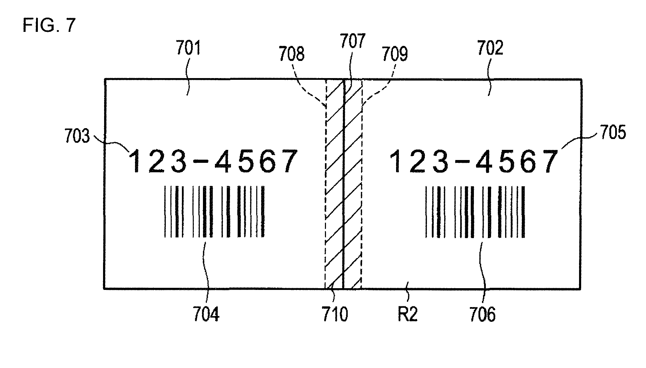

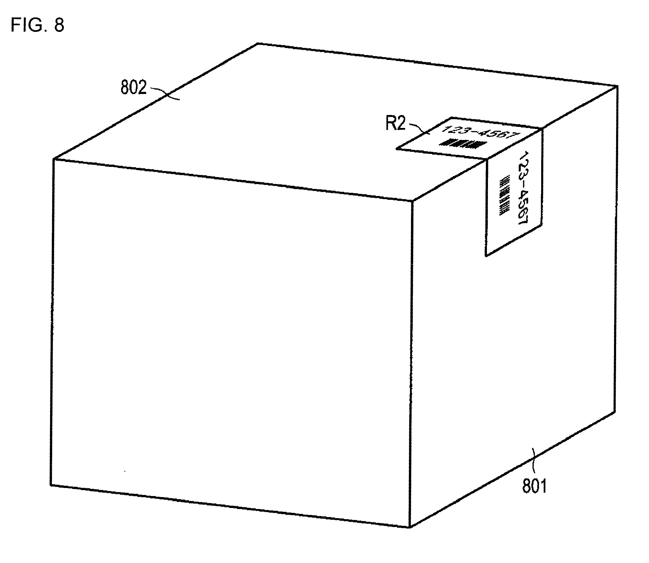

Fig. 7 is a figure showing the composition of the printing side in the label R2 as 2nd example of composition concerning an embodiment form. Moreover, Fig. 8 is a figure showing signs that the label R2 of the 2nd example of composition was stuck on the delivery thing. In addition, the composition that the composition (section of a label) of the label paper itself was explained in Fig. 2 may be sufficient as the label of the 2nd example of composition shown in Fig. 7.

As shown in Fig. 7, the printing surface of the sheet-like base material 201 has rectangular form, and, as for the label R2 of the 2nd example of composition, the long neighborhood is more than twice the size of the short neighborhood, for example. The label R2 of the 2nd example of composition shown in Fig. 7 has the two partial domains 701 and 702, and identification information is printed to each partial domain 701 and 702, respectively. The label R2 of the 2nd example of composition shown in Fig. 7 is stuck ranging over two adjoining fields in a delivery thing, as shown in Fig. 8. In the example shown in Fig. 8, the label R2 is stuck so that the partial domains 701 and 702 may be located in the field 801 and the field 802 which are two adjoining fields.

That is, the partial domain 701 of the label R2 shown in Fig. 7 is stuck on the field 801 of a delivery thing, and the partial domain 702 of the label R2 is stuck on the field 802 of a delivery thing. Here, the correspondence relation between the partial domains 701 and 702 and the pasting sides 801 and 802 in a delivery thing may become opposite. For example, the partial domain 701 is stuck on the field 802, and the partial domain 702 may be made to be stuck on the field 801.

In the partial domain 701 and the partial domain 702, identification information is printed, respectively. In the example shown in Fig. 7, the postal code number (string information) which is the information showing a destination as the same identification information, and the bar code by which the postal code number was encoded are printed in the partial domain 701 and the partial domain 702. In the partial domain 701, the postal code number 703 and the bar code 704 are printed.

In the partial domain 702, the postal code number 705 and the bar code 706 are printed. The postal code number 703 and the postal code number 705 are the same string information, and the bar code 704 and the bar code 706 show the same information.

The partial domain 701 and the partial domain 702 where the identification information that the label R2 was the same was printed are stuck on the two fields 801 of a delivery thing, and the field 802, respectively. Thereby, recognition of the identification information printed to the partial domains 701 and 702 of the label R2 is attained by reading the partial domain 701 in the field 801 of a delivery thing, and which one [ of the field 802 ] field, or 702.

Thereby, even if information reading equipment, such as a bar code reader and a camera, is in the states where a delivery thing is arbitrary, a possibility that the identification information currently printed by the label R2 stuck on the delivery thing can be read becomes high. Moreover, between two identification information printed to the partial domains 701 and 702 one side, dirt -- hiding -- etc. -- for a reason, when reading is impossible, information reading equipment, such as a bar code reader and a camera, can succeed in recognition of identification information, if the identification information currently printed to the remaining 1 partial domains can be read.

Moreover, a box-like (shape of rectangular parallelepiped) delivery thing touches the upper part or the side in the state where more than one are stacked.

Identification information can be read in the partial domain of the label R2 currently stuck on another field even if it is a case where one field is hidden with other delivery things. For example, if the field 802 can be read even if the field 801 shown in Fig. 8 is hidden, identification information can be recognized from the partial domain 702 stuck on the field 802.

Moreover, the whole identification information may be able to be recognized by unifying the reading result of two partial domains. for example, two partial domains -- the front half of identification information can be read in one partial domain among them, and when the rear half of identification information is able to be read, it becomes possible from another partial domain to recognize the whole identification information by unifying both.

In addition, various kinds of information and the information on various forms can be considered like what was explained with the 1st embodiment form as identification information printed to each partial domain 701 and 702. Moreover, it is not necessary to print the same information in each partial domain 701 and 702. Information including identification information should just be printed in each partial domain 701 and 702, for example, a bar code is printed to one side, and you may make it print string information in another side, and may make it print a mark etc. they to be [ any ]. The information same also about the information printed to each partial domain 701 and 702 as what was explained with the 1st embodiment form is printable.

Moreover, in the example shown in Fig. 7, the label R2 is the straight line 707 (or divided into the partial domain 701 and the partial domain 702 by the domain 710 on the basis of the straight line 707.). The straight line 707 which divides the partial domain 701 and the partial domain 702 by the straight line 707 corresponds to the boundary of the field and field in a delivery thing, and the label R2 is stuck on a delivery thing so that the straight line 707 may be located in the boundary of a field and a field. By considering it as such arrangement, the label R2 can be stuck on the two fields 801 and 802 in a delivery thing so that each of the partial domains 701 and 702 may correspond.

Moreover, it is put into 1 or two or more perforations by the sheet-like base material 201 along the straight line 707 at the label R2. In the example shown in Fig. 7, it is put into the perforations 708 and the perforations 709 in the position which predetermined width left to the straight line 707 on the label R2 as for both sides. Even not only the sheet-like base material 201 but the adhesion layer 202 and the exfoliation base material 203 may penetrate the perforations 708 and 709. Moreover, perforations may be composition put in only one along the straight line 707. The effect by putting perforations into the label R2 is a delivery thing by perforations stick [ are the same as that of what was explained with the 1st embodiment form, and / the label R2 ].

Opening becomes easy and it can reduce wrinkles or a crack in the partial domain by distortion produced in the delivery thing, etc.

Moreover, as shown in Fig. 7, with the label R2, information is not printed in the range of predetermined width (domain) from the straight line 707. In the example shown in Fig. 7, nothing is printed in the domain (unprintable area) 710 inserted into two perforations into which it was put along with the both sides of the straight line 707. The straight line 707 is located in the angle (boundary of a field and a field) of a delivery thing when the label R2 is stuck. In order that the angle of a delivery thing may contact other objects easily, in the label R2, the portion near the straight line 707 becomes dirty, or it is easy to damage it. For this reason, the information printed by about 707 straight line becomes dirty, is read by breakage etc., and becomes impossible easily. Therefore, the printed identification information reads and it is hard to become impossible by not printing information within the limits of predetermined width from the straight line 707.

Moreover, the domain 710 on the basis of the straight line 707 and the straight line 707 tends to sight a position. For example, as shown in Fig. 7, you may actually print the straight line 707 to the printing surface of the label R2 as a line. Moreover, since the domain 710 is specified, along with the perforations 708 and 709, you may print by the solid line or a dotted line, and the color of the partial domain 701, the partial domain 702, and the domain 710 may be changed.

When sticking on a delivery thing, it is necessary to stick the label R2 so that the domain 710 may be located in the boundary line of a field and a field. When the visibility of the domain 710 is bad, a possibility that attachment of the label R2 will take time, or attachment goes wrong, and the domain 710 will shift from the boundary line of a field and a field, and will be stuck becomes high. That is, it is possible by making the visibility of the domain 710 high to be able to make the label R2 easy to stick on the right position on the basis of the angle of a delivery thing, and to increase the efficiency of work.

The position separable between the partial domain 701 and the partial domain 702 has the above width to some extent. For example, if a label is not stuck so that the perforations concerned may be exactly located in the boundary line of the field and field in a delivery thing when the number of the perforations in alignment with the straight line 707 is one, the effect by the perforations mentioned above becomes small. Like the example shown in Fig. 7 by vacating a certain amount of interval and preparing two perforations (the perforations 708, perforations 709), What is necessary will be just to stick a label so that the boundary line of the field and field in a delivery thing may be located between two perforations (the perforations 708, perforations 709) or in its neighborhood, the time and effort of the position adjustment at the time of label pasting can be reduced, and the efficiency of the pasting work of a label can be increased.

Moreover, when separation with the partial domain 701 and the partial domain 702 becomes easier by the perforations 708 and 709, Also when it becomes possible to open the box of a delivery thing easily, with the label R2 stuck and distortion arises in a delivery thing, it can suppress that wrinkles or a crack occurs in the partial domain of the label R2. That is, the effect which increases the efficiency of label pasting work, the effect which can open the box of a delivery thing easily, the effect which controls generating of the wrinkles to a label, etc. are expectable by giving the above width to the position which can separate the partial domain 701 and the partial domain 702 to some extent.

Moreover, you may prepare 1 more or two or more perforations between two perforations. Moreover, the hole of perforations is enlarged and achieving equivalent effects over the perforations of a small number by making perforations thick is also considered. Moreover, in order to heighten more the effect similarly mentioned above, you may make it not form the adhesion layer 202 between the perforations 708 and the perforations 709. By not forming the adhesion layer 202, the power for opening the box of a delivery thing can get across to perforations easily direct, and the box of a delivery thing can be easily opened now. Moreover, since distortion of a delivery thing gets across to perforations easily direct, generating of the wrinkles in a partial domain or a crack can be controlled.

Next, generation of the label (by Label Printer 1) R1 and R2 is explained.

Here, Label Printer 1 shall acquire the print set information over the dot image and printing side for printing to the printing side in the identification information and the sheet-like base material 201 of a label paper which should be printed on the label R1 stuck on a delivery thing from PC20. However, CPU 101 may generate the print set information over the dot image and printing side for the identification information and printing which should be printed on the label R1 from the information inputted by the keyboard 11 etc.

Namely, if the identification information and the dot image for printing which should be printed on the label R1 from PC20 with the communication interface 106, and the print set information over a printing side are received, CPU 101 memorizes the print set information over the dot image and printing side for the identification information and printing which should be printed on the received label R1 to the data buffer 31, the drawing buffer 32, and the label setting buffer 33, respectively.

When generating the label R1 of the 1st example of composition, the dot image for printing of composition as shown in Fig. 3 is stored in the drawing buffer 32, for example. In this case, as print set information, the domains 315 and 316 on the basis of the straight line 309,301 are set up as an unprintable area. Moreover, what is necessary is just to store in the label setting buffer 33 etc. the information which shows the position of perforations with print set information, in putting in the perforations 311, 312, 313, and 314 by the perforations processing machine style 16.

Moreover, when generating the label R2 of the 2nd example of composition, the dot image for printing of composition as shown in Fig. 7 is stored in the drawing buffer 32, for example. In this case, as print set information, the domain 710 on the basis of the straight line 707 is set up as an unprintable area. Moreover, what is necessary is just to store in the label setting buffer 33 etc. the information which shows the position of perforations with print set information, in putting in the perforations 708 and 709 by the perforations processing machine style 16.

When each information is stored in each buffer 31, 32, and 33, CPU 101 takes out a label paper according to the conveyance mechanism 14, and makes a label paper convey to the printing position by the printhead 13a. CPU 101 directs printing to the label paper based on the dot image and print set information for printing for the printing controller 109 and the ribbon controller 111 according to the conveyance situation of the label paper by the conveyance mechanism 14. By carrying out drive control of the printhead 13a based on the dot image and print set information for printing, the ink ribbon supplied from the ribbon feed mechanism 15 is used for the printing controller 109, and it is to the sheet-like base material 201 of a label paper.

The dot image for printing is printed to the printing side which can be set.

Moreover, CPU 101 performs perforations processing treatment which puts in perforations by the perforations processing machine style 16 to the label paper taken out according to the conveyance mechanism 14. CPU 101 directs perforations processing based on the position information on the perforations contained in print set information etc. for the perforations processing controller 112 according to the conveyance situation of the label paper by the conveyance mechanism 14. The perforations processing controller 112 performs processing which puts perforations into the sheet-like base material 201 (or label paper whole) of a label paper by carrying out drive control of the perforations processing machine style 16 based on the specified perforations processing position.

Perforations processing treatment mentioned above may be carried out before the printing processing by the printhead 13a to the printing side of a label paper, and may be carried out after printing processing. In addition, you may make it omit perforations processing treatment by putting perforations into the predetermined position of the label paper of an initial state beforehand.

As opposed to the label paper which conveys Label Printer 1 according to a conveyance mechanism by the above processing, The label R1 of the 1st example of composition that put perforations into the width on the basis of the straight line or straight line which prints identification information according to a printing mechanism etc. to three partial domains as shown in Fig. 3, respectively, and divides each partial domain by the perforations processing machine style is generable. Moreover, Label Printer 1 receives the label paper conveyed according to a conveyance mechanism, The label R2 of the 2nd example of composition that put perforations into the width on the basis of the straight line or straight line which prints identification information according to the printing mechanism 13 to two partial domains as shown in Fig. 7, respectively, and divides each partial domain by the perforations processing machine style is generable.

As mentioned above, the label concerning an embodiment form has two or more partial domains divided in the straight line corresponding to the boundary of the adjoining field and field in a delivery thing, and the identification information for identifying a delivery thing to each of each partial domain is printed. Identification information can be displayed on two or more fields which are not depended on the size of a delivery thing but can be set in a delivery thing with fixed size and the label of a fixed print point by this, and the label which can improve various kinds of working efficiency at low cost can be offered.

Moreover, the label concerning this embodiment form prepares the domain of the predetermined width which carried out the standard of the straight line corresponding to the boundary of the field and field in a delivery thing, and the identification information for identifying a delivery thing to each of two or more partial domains divided in the domain of the predetermined width on the basis of the straight line is printed. Although this assumed the dirt and breakage which are produced on the boundary line of the field of a delivery thing, and a field, even if it produces, the label whose reading of the identification information printed to the partial domain becomes possible can be offered.

Moreover, the domain of the predetermined width on the basis of the straight line which divides two or more partial domains can offer the label identification information becomes difficult to read, even if it becomes dirty on the boundary line (angle) of the field and field in a delivery thing or breakage etc. arise by considering it as the unprintable area which does not print identification information.

Furthermore, the identification information for identifying a delivery thing to each of two or more partial domains divided in the straight line corresponding to the boundary of the field and field in a delivery thing prints the label concerning this embodiment form of this, And the perforations which become that it is easy to be cut when the boundary line of the field and field in a delivery thing opens, or when the boundary line of the field and field in a delivery thing is distorted are prepared in the boundary line of a partial domain and a partial domain. Thereby, stick [ the label ], it is easy to open a delivery thing. Moreover, even if distortion arises in a delivery thing, in the partial domain which printed identification information, it is hard to generate wrinkles or a crack, and the label on which the reading (recognition) rate of the identification information printed to the partial domain is not reduced can be offered.

Although some embodiment forms of the present disclosure were explained, these embodiment forms are shown as an example and limiting the range of disclosure does not have intention of them. These new embodiment form can be carried out with other various forms, is a range which does not deviate from the summary of disclosure, and various abbreviations and replacement are performed and it can make a change. These embodiment form and its modification are included in disclosure indicated to the claim, and its equal range while they are included in the range and summary of disclosure.

## Claims

1. A label to be affixed on an object comprising:
a sheet-like base material with a printing side and an adhesion layer opposite the printing side;
the label being divided into two or more partial domains;
wherein identification information to identify the object is printed on each partial domain and wherein each partial domain is affixed to a different side of the object.

2. The label according to claim 1 wherein
the label is divided into three partial domains and operable to be affixed to one corner of the object, each partial domain affixed to a different side of the object.

3. The label according to claim 2 wherein
the label is divided into three partial domains by two straight lines that intersect perpendicularly,

4. The label according to one of claims 1 to 3 wherein
the sheet-like base material has a rectangular printing side whose long side is more than twice the length of the short side

5. The label according to one of claims 1 to 4 wherein
the identification information contains at least one of a destination, a delivery method, or an attribute of a delivery thing.

6. The label according to one of claims 1 to 5 wherein
the identification information contains at least one of a character, a character string, a mark, a bar code, or a two-dimensional bar code.

7. The label according to one of claims 1 to 6 wherein
the range of the predetermined width on the basis of each of the two straight lines is a domain where the identification information is not printed,

8. The label according to claim 3 or a claim dependent on claim 3 wherein the two straight lines are printed on the printing side of the label.

9. The label according to claim 3 or a claim dependent on claim 3 wherein the sheet-like base material is provided with perforations along the straight lines.

10. The label according to claim 9 wherein
the perforations are set to positions of predetermined width about the straight lines.

11. The label according to claim 9 or 10, wherein
the adhesion layer is not set to the opposite side of the predetermined width about the straight lines.

12. A label printer for generating a label to affix to an object comprising,
a conveyor for moving a sheet-like base material with a printing side and an adhesion layer opposite the printing side, the label being divided into two or more partial domains;
a printer for printing identification information to identify the object on the printing side of the sheet-like base material, wherein the identification information to identify the object is printed on each partial domain and wherein each partial domain is affixed to a different side of the object.

13. The label according to claim 12 wherein
the label is divided into three partial domains by two straight lines that intersect perpendicularly and the printer prints the identification information to each of the three partial domains.
